# EUROPEAN PATENT APPLICATION

(11) **EP 4 618 627 A1**
(43) Date of publication of application: **17.09.2025**
(21) Application number: 23888979.4
(22) Date of filing: 23.10.2023
(51) Int. Cl.: H04W 48/16, H04W 8/00, H04W 24/08, H04W 60/00, H04W 76/27

(54) **SENSING MEASUREMENT**

(30) Priority: 09.11.2022 US 202263423806 P; 09.01.2023 US 202363437752 P; 08.06.2023 US 202363471761 P
(71) Applicant: LG Electronics Inc., Yeongdeungpo-gu Seoul 07336 (KR)
(72) Inventor: NOH, Yujin, Seoul 06772 (KR); LEE, Ki-Dong, Seoul 06772 (KR)
(74) Representative: Frenkel, Matthias Alexander
(86) International application number: PCT/KR2023/016498
(87) International publication number: WO 2024/101716

(57) **Abstract**

Provided in one embodiment of the present disclosure is a method by which a first device performs communication. The method may comprise steps in which: a UE performs a registration procedure for registering in an AMF node; a sensing group setup request message for setting up a sensing group is transmitted to one or more candidate responders including a second device; receiving a response message from the second device; and determining, on the basis of the number of minimum responders of the sensing group, whether to transmit a completion message.

## Description

### TECHNICAL FIELD

The present disclosure relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In the past, only non-3GPP signals were used as a technology for sensing objects that did not have a communication module. There is no specific method for supporting sensing based on 3GPP signals.

### DISCLOSURE

### TECHNICAL SOLUTION

In one aspect, a method, performed by a first device, for performing communication is provided. The method may include: performing a registration procedure for UE to register to an AMF node; transmitting a sensing group setup request message to one or more candidate responders, including a second device, for setting up a sensing group; receiving a response message from the second device; and determining whether to transmit a completion message, based on the minimum number of responders in the sensing group.

In another aspect, a device is provided that implements the method.

In one aspect, a second device is provided that performs a method for performing communication. The method may include: performing a registration procedure for the UE to register to anAMF node; receiving a sensing group setup request message from a first device for setting up a sensing group; and transmitting a response message to the first device.

In another aspect, a device implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIG. 7 shows a procedure of performing V2X or SL communication by a UE based on a transmission mode, based on an embodiment of the present disclosure.
FIG. 8 illustrates an example of a group communication setup procedure according to an example of the present disclosure.
FIG. 9 illustrates an example of a sensing measurement process.
FIGS. 10a and 10b illustrate a first example of a procedure for setting up a sensing group according to one embodiment of the present disclosure.
FIG.11 shows a second example of a procedure for setting up a sensing group according to one embodiment of the present disclosure.
FIG.12 shows a first example of a procedure related to sensing measurements according to one embodiment of the present disclosure.
FIGS.13a and 13b show a second example of a procedure related to sensing measurements according to one embodiment of the present disclosure.
FIG. 14 shows a third example of a procedure related to sensing measurements according to one embodiment of the present disclosure.
FIGS.15a to 15c show a fourth example of a procedure related to sensing measurements according to one embodiment of the present disclosure.
FIG.16 shows an example of a procedure according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

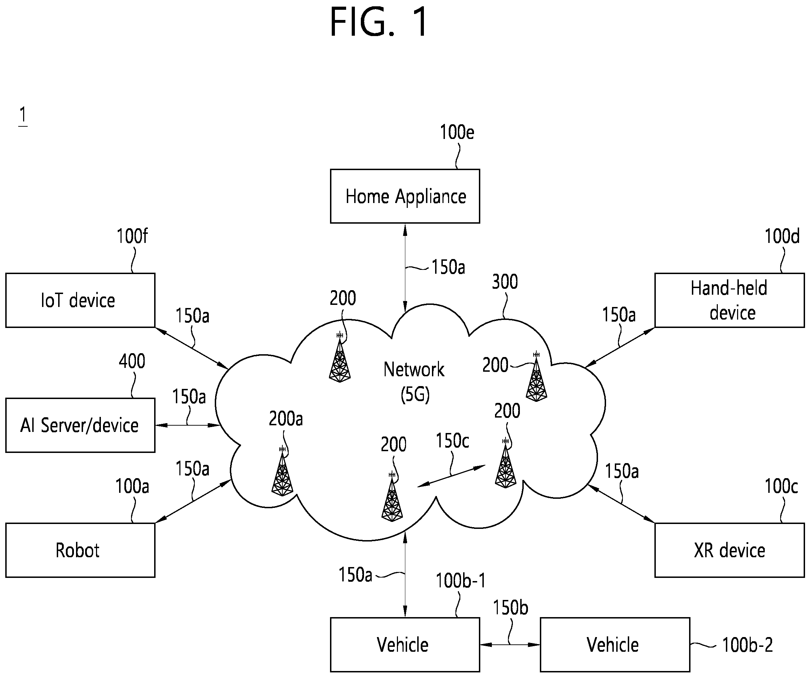

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmitting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

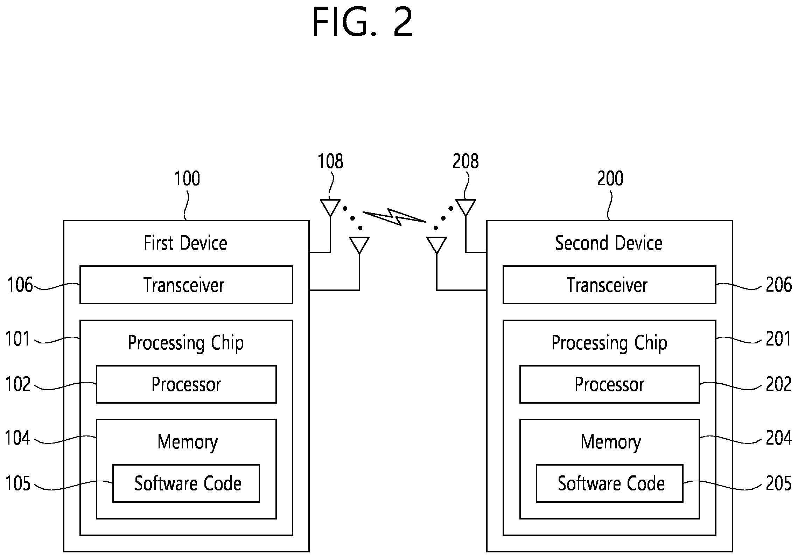

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

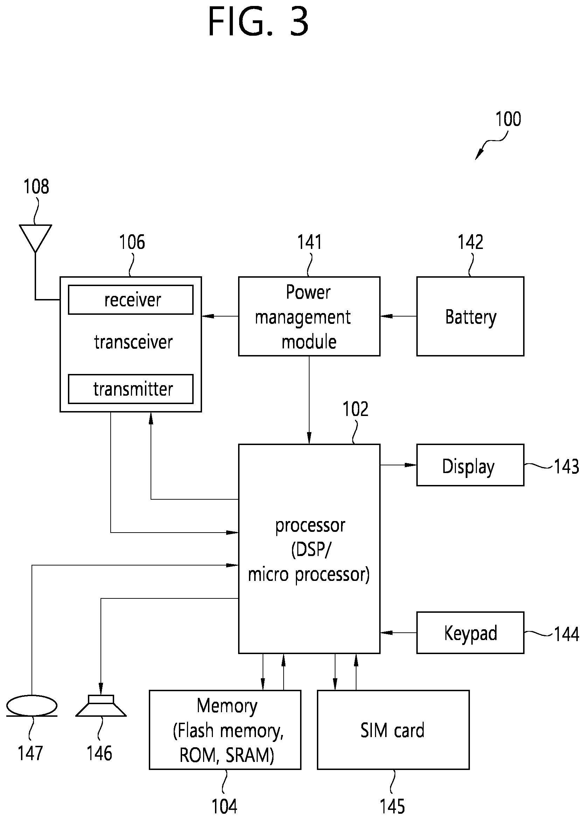

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

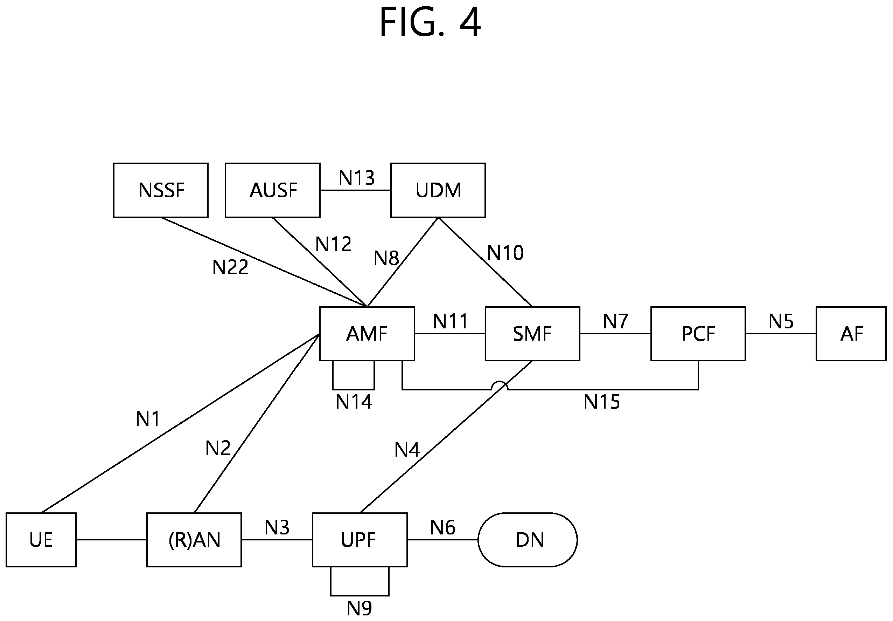

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture includes the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

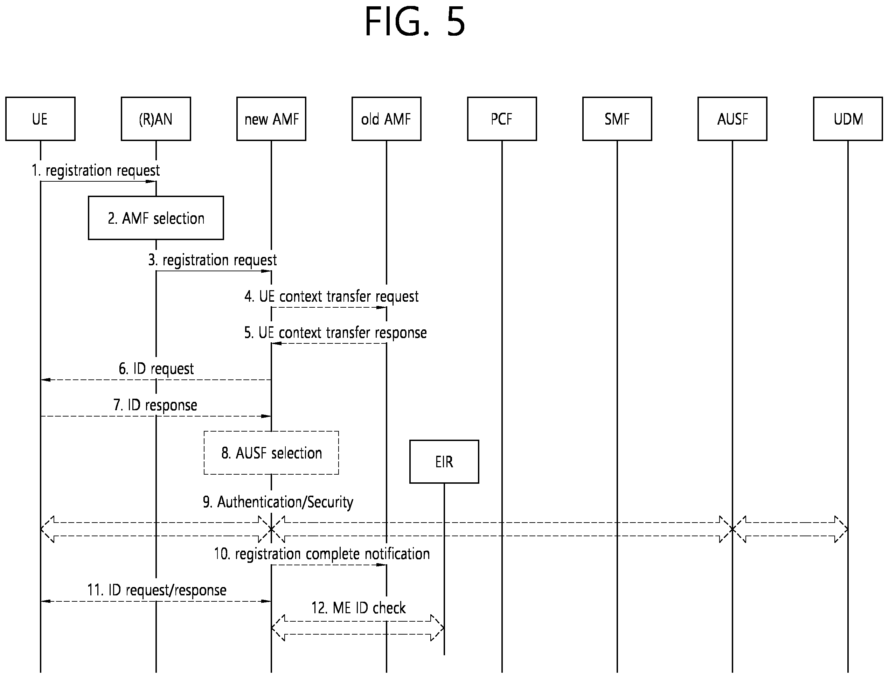

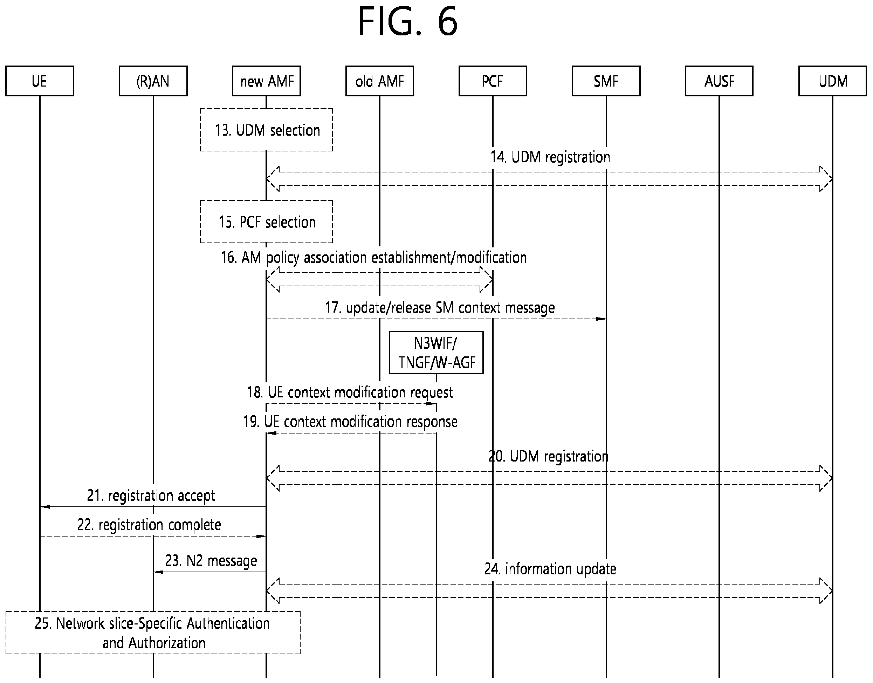

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available,
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf Communication RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

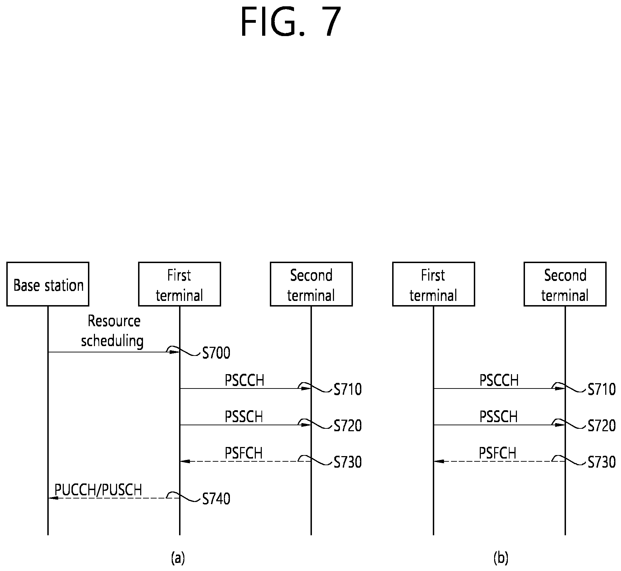

**FIG. 7** **shows a procedure of performing V2X or SL communication by a UE based on a transmission mode, based on an embodiment of the present disclosure.**

The embodiment of FIG. 7 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 7 shows a UE operation related to an LTE transmission mode 1 or an LTE transmission mode 3. Alternatively, for example, (a) of FIG. 7 shows a UE operation related to an NR resource allocation mode 1. For example, the LTE transmission mode 1 may be applied to general SL communication, and the LTE transmission mode 3 may be applied to V2X communication.

For example, (b) of FIG. 7 shows a UE operation related to an LTE transmission mode 2 or an LTE transmission mode 4. Alternatively, for example, (b) of FIG. 7 shows a UE operation related to an NR resource allocation mode 2.

Referring to (a) of FIG. 7, in the LTE transmission mode 1, the LTE transmission mode 3, or the NR resource allocation mode 1, a base station may schedule SL resource(s) to be used by a UE for SL transmission. For example, in step S700, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S710, the first UE may transmit a PSCCH (e.g., sidelink control information (SCI) or 1^{st}-stage SCI) to a second UE based on the resource scheduling. In step S720, the first UE may transmit a PSSCH (e.g., 2^{nd}-stage SCI, MAC PDU, data, etc.) related to the PSCCH to the second UE. In step S730, the first UE may receive a PSFCH related to the PSCCH/PSSCH from the second UE. For example, HARQ feedback information (e.g., NACK information or ACK information) may be received from the second UE through the PSFCH. In step S740, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 7, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S710, a first UE which has selected resource(s) from a resource pool by itself may transmit a PSCCH (e.g., sidelink control information (SCI) or 1^{st}-stage SCI) to a second UE by using the resource(s). In step S720, the first UE may transmit a PSSCH (e.g., 2^{nd}-stage SCI, MAC PDU, data, etc.) related to the PSCCH to the second UE. In step S730, the first UE may receive a PSFCH related to the PSCCH/PSSCH from the second UE.

Referring to (a) or (b) of FIG. 7, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Referring to (a) or (b) of FIG. 7, in step S730, the first UE may receive the PSFCH. For example, the first UE and the second UE may determine a PSFCH resource, and the second UE may transmit HARQ feedback to the first UE using the PSFCH resource.

Referring to (a) of FIG. 7, in step S740, the first UE may transmit SL HARQ feedback to the base station through the PUCCH and/or the PUSCH.

In the past, technologies for sensing objects (e.g., environment, people, animals, etc.) that do not have communication modules included radar, lidar, RF, and camera. Cellular networks were only used for data transmission. To sense objects, use cases based on 3GPP signals as well as non-3GPP signals can be discussed. In addition, the performance requirements to satisfy these use cases can be discussed.

No specific measures were discussed to support the 3GPP sensing measurement process based on 3GPP signalling. For example, there was no specific discussion on enhancements to the RAN specifications related to such sensing,
In the various examples of the present disclosure, an example of performing a sensing-related measurement is described. For example, an example of a sensing communication procedure in 3GPP is described. An example of forming a sensing measurement group in the sensing communication procedure is described.

In various examples of the present disclosure, a sensing group can be established. Hereinafter, examples related to the sensing group will be explained. The sensing group can be, for example, a set of sensing transmitters and sensing receivers that can collect sensing data. Here, the locations of the sensing transmitters and sensing receivers can be known.

For example, a sensing group can be used for a sensing service. Based on the sensing group, the sensing service can also make efficient use of resources. For example, in a sensing service, a signal that can only be detected/decoded by members of the sensing group may be transmitted at once. Another example is that for a member of the sensing group who is additionally using its power, a signal that can be terminated at once may be transmitted.

User Equipment (UE) may form or establish a sensing group. For example, the UE may use 3GPP Group Communication System Enablers (GCSE) or '3GPP Group Communication'. The UE may establish a sensing group based on the following example operations:
1) Group Creation Request: A user or UE initiates the group creation process by transmitting a group creation request. This request typically includes information such as the group name, description, and a list of users (UE) who should belong to the group.
2) Authentication and Authorization: The network verifies the user's identity and checks whether the user has the necessary authorization to create a group. This step ensures that only authorized users can create groups.
3) Group Creation: Once the user has been authenticated and authorized, the network creates a new group within the group communication system. The group is assigned a unique group ID and other necessary parameters are configured.
4) Group Invitation: Once a group is created, the user (or UE) who started the group can transmit invitations to other UEs to join the group. These invitations can be sent via various communication channels within the group communication application, such as SMS, push notifications, or direct messages.
5) UE Acceptance: An invited UE can accept or reject the invitation. If the UE accepts, it is added to the group by the network. If the UE rejects, it remains outside the group.
6) Group Configuration: The creator of a group (e.g., the UE that sent the invitation) can configure various settings for the group, such as group access rights, group roles, and group communication policies, etc. Based on these Configuration, which UE (or user) can transmit messages, which UE (or user) can manage the group, and other aspects of the group's operation, may be determined.
7) Group Communication: Once a group is set up (or configured) and members are added, the UEs within the group can begin to communicate with each other. This communication may include text messages, voice calls, video calls, or multimedia sharing, depending on the capabilities of the group communication system.
8) Group Management: One or more authorized group members can manage the group, such as adding or removing members, changing group settings, and performing other administrative tasks. The creator of the group or a designated administrator may have additional rights to manage the group.
9) Security and Encryption: Group communications in 3GPP networks typically incorporate security measures to protect the confidentiality and integrity of group messages. Encryption and authentication mechanisms are used to ensure that only authorized members can access group content.
10) Termination or Disbanding: A group creator or administrator can terminate a group at any time to delete all members and dissolve the group. This may be necessary for a variety of reasons, such as the group's purpose being achieved or membership changing.

For reference, the UE operations described above are only examples, and the scope of the present disclosure is not limited by the above operations. For example, only some of the operations described above may be performed.

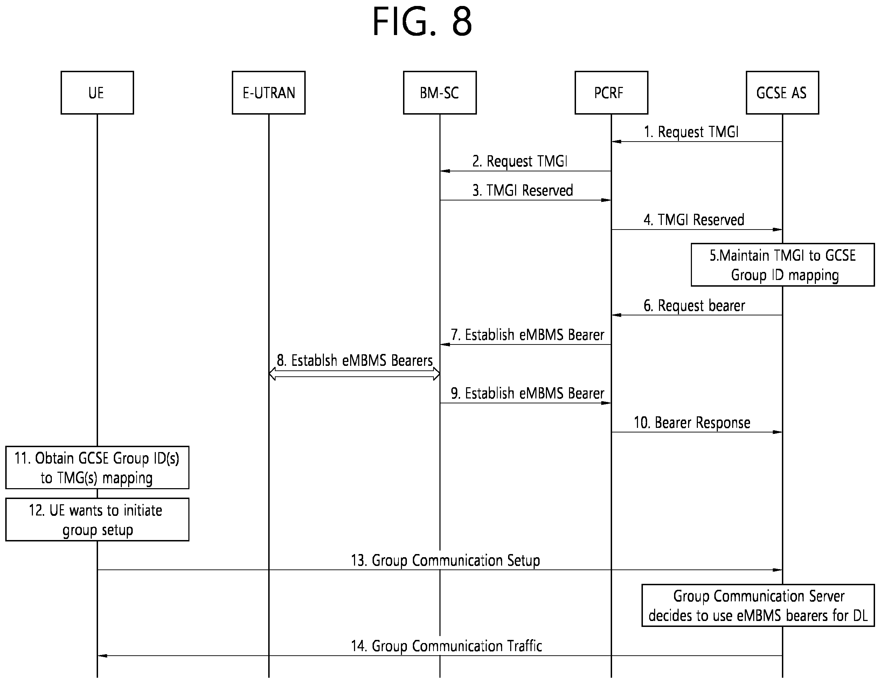

Below, with reference to the example in FIG. 8, an example of group communication setup using eMBMS bearers is shown. For reference, the following example can be performed in a similar manner in a 5G network.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 8** **illustrates an example of a group communication setup procedure according to an example of the present disclosure.**

The example in FIG. 8 is an example of setting up group communications using pre-established eMBMS bearers.

The interaction between the UE and the GCSE AS is illustrated in the example in FIG. 8.

Note that EMBMS refers to Evolved Packet System MBMS, GCSE AS refers to Group Communication System Enablers (GCSE) Application Server (AS), MBMS refers to Multimedia Broadcast/Multicast Service, MBSFN refers to MBMS over a Single Frequency Network, MuSe refers to Multipoint Service

1-4. The GC server requests a TMGI for the GCSE group from the BM-SC through the PCRF. For example, the GCSE AS may transmit a TMGI request message to the BM-SC through the PCRF. The MB-SC may transmit a TMGI reserved message to the GCSE AS through the PCRF.

5. The GC server maintains a mapping of TMGI to GCSE group IDs.

6-10. A pre-established bearer is set up for the group. The MBSFN area is based on the eNB that was pre-selected for this GCSE GC as provided to the BM-SC. When triggered by Step 8, the E-UTRAN transmits the MBMS-related system information and MCCH configuration information over the air.

The GCSE AS transmits a bearer request to the PCRF. The PCRF transmits an eMBMS bearer establishment message to the BM-SC. The BM-SC and the E-UTRAN establish an eMBMS bearer. The BM-SC transmits an eMBMS bearer establishment message to the PCRF. The PCRF may transmit a bearer response message to the GCSE AS.

The UE periodically monitors the MCH scheduling information (MSI) to detect if the TMGI associated with the MTCH has been scheduled.

The UE's GCSE application registers with the GCSE application server.

The registration message may include all group identifiers of interest to the UE.

12. The TMGI(s) of the GCSE group are returned to the UE if available.

The UE maintains a mapping of TMGI to GCSE group identifiers.

13. the UE monitors the network to determine the availability of eMBMS transmissions corresponding to the TMGI of the GCSE group of interest. The UE initiates the group communication established for the specific GCSE group using the unicast UL bearer. The UE also indicates the availability of the eMBMS transport corresponding to the TMGI of the GCSE group in the group establishment signaling.

The GCSE AS determines whether to use the preset eMBMS bearer for the downlink. When E-UTRAN detects that data is coming from the network, E-UTRAN modifies the MSI to inform the UE of the schedule. The UE receives the MSI and tunes to the MTCH.

The following describes an example procedure for setting up group communication using multiple unicast bearers. In the following examples, the maximum number of UEs that can participate in the group communication may be less than the maximum number of UEs according to the example of FIG. 8.

The following solution/option does not use eMBMS, but instead uses multiple unicast bears to distribute downlink media. This option is suitable when there are not many UEs in the group.

GCSE AS counting of UEs per group per cell is described.
a) For example, when a public safety user's shift begins, the user "clocks on" and an IMS-style signal is used to register the user/device. Then, in the event of an eMBMS, an IMS-style signal is used to inform the device of the TMGI and decryption key that can be used.
   NOTE 1: The term "IMS-style signaling" refers to, for example, the use of SIP messages and/or IMS authentication and/or the use of QCI 5 as a bearer for SIP signaling.
b) The MME instructs EUTRAN to keep this UE in the RRC connection state. A subscription record in the HLR for a GC-only APN or an indication of a GCSE AS (e.g., Rx/Gx/S5-S8/S11 message) may transmit the command to the MME to inform the RAN to keep the UE in RRC association.

c1) The RFSP/SPID feature is used to group emergency service users on the same frequency/RAT (typically LTE frequencies that form the "coverage layer" of the network).

c2) Cells in the LTE coverage layer of the network are configured with eMBMS subframes, but the MCCH does not normally signal TMGI.

NOTE 2: This configuration is considered to consume very little radio resources if there are a significant number of Rel 10 or higher mobiles in the cell. The battery impact on the UE is small when TMGI is not signaling (MCCH reception is only required every 5.12 seconds).

d) The PDN GW activates ULI reporting procedures, based on cell-based granularity. This activation can be based on APNs, or it can be controlled through the interface between the PDN GW and the GCSE AS via Rx/Gx. The latter option enables relaxed location reporting (e.g., TA-based) for devices in the TA list/PLMN that are excluded from the group calling area.

NOTE 3: As an alternative to network-based ULI reporting, the UE may detect a cell change and notify the UE is in a new cell by transmitting a user data packet to the GCSE AS. Cell change reporting from the RRC layer to the 'upper layer' is a feature supported by the USIM application tool kit and most modern device operating systems/engineering features. However, the RAN signalling load that occurs when switching from connected-DRX mode to data transmission mode each time the cell changes may be slightly higher than the load caused by ULI reporting transmitted during movement within the eNB, and using ULI reporting may reduce the data transmission of the device, thereby improving battery life somewhat. Using this alternative, the network can alleviate the need to keep the mobile in an RRC connected state if the UE uses an idle mode DRX (e.g., 320 ms) that meets the latency requirements of the service.

e) In each user geolocation report, 'GCSE AS' will increment or decrement the counter based on the number of users in each group in each cell.

f) Based on the number of users in groups within a cell (and the cell's RAT), 'GCSE AS' determines whether to distribute future media/data from that cell by
- An existing established point-to-point bearer, and/or,
- MBMS broadcast bearer (at this point, step 6 in FIG. 8 occurs and the cell starts broadcasting its group's TMGI on the MCCH, even if no media is present). A single-cell MBSFN area is used because the number of users per group per cell can vary significantly, even within a cell on a single eNodeB.

When a group spans multiple cells and media is sent to that group, it is expected that some cells will use point-to-point bearers; some cells will use eMBMS bearers; and at least in transient mobility cases, it is normal for some cells to use both point-to-point bearers and eMBMS bearers.

g) Even when eMBMS is in use, the UE may use unicast uplink transmissions to the GCSE AS to ack/nack downlink transmissions. If the eMBMS link quality for a particular UE is insufficient, the GCSE AS may use a point-to-point downlink bearer to transmit media to that UE.

As an additional supplement to the above procedure, if the service used within the group has a requirement for a fast response time (e.g., 300 ms), the subscription record in the HLR (in step b) informs the MME [and SGSN] to instruct the RAN to maintain this UE in an RRC connection based on "a short connected mode DRX".

The following describes in detail the procedures related to sensing measurements according to various examples in the present disclosure.

Next-generation wireless communications are considered a key enabler for emerging applications in various fields such as smart cities, industrial IoT, eHealth, automotive, public safety, and education. Robust sensing capabilities that support applications in these fields are expected to play a key role in meeting the demand for high-quality services based on accuracy in environmental awareness use cases. Therefore, it is necessary to start discussions on the detection of relevant functions, technologies, and feasibility in both cellular and WiFi networks.

The persent disclosure describes a sensing measurement process for collecting sensing measurement data. Here, the sensing measurement data may be data collected on radio/wireless signals affected by an object or environment of interest for sensing purposes (e.g., reflection, refraction, diffraction). Hereinafter, the sensing measurement data may be used/interpreted to represent 3GPP sensing data and/or non-3GPP sensing data. The information derived from sensing measurement data may be the sensing result. Examples of four components for clarifying the sensing measurement process (e.g., sensing initiator, sensing responder, sensing transmitter, and sensing receiver) are introduced below. For reference, these four components are just examples. The scope of the present disclosure is not limited by the following four components. For example, the names of the four components are just examples, and the operations performed by each component described below may be performed by objects with different names. In addition, only one or some of the four components may be used. In addition, the operation of one or more of the four components may be performed by a single entity. For example, all four components may not be used. The following are examples of the four components:
- Sensing initiator: The sensing initiator can be a base station (e.g., eNB or gNB), user equipment (UE), or consumer premise equipment (CPE) that initiates the sensing measurement process.
- Sensing responder: A BS, UE, or CPE that participates in the sensing measurement process by responding to the sensing initiator.
- Sensing transmitter: A sensing transmitter is an entity that transmits a sensing signal to be used by a sensing service for operation. A sensing transmitter can be an NR RAN node or a UE, and a sensing transmitter can be located in the same entity as or different from a sensing receiver. In the sensing measurement process, the BS, UE, or CPE that transmits the sensing signal to be measured can be a sensing transmitter.
- Sensing receiver: A sensing receiver is an entity that receives the sensing signals that the sensing service will use for its operation. The sensing receiver can be an NR RAN node or a UE. The sensing receiver can be located in the same entity as the sensing transmitter or in a different entity. A sensing receiver may be a BS, UE, or CPE that receives a sensing signal transmitted by a sensing transmitter and obtains sensing measurement data in the sensing measurement process.

Devices (BS, UE or CPE) may operate as a sensing initiator, sensing responder, sensing transmitter or sensing receiver during the sensing measurement process.

For example, a sensing initiator initiates a sensing measurement process (e.g., a process using PDSCH, PDCCH, PUSCH, PUCCH, SL-SCH, etc.). The sensing initiator may act as a sensing transmitter, a sensing receiver, both a sensing transmitter and a sensing receiver, or neither a sensing transmitter nor a sensing receiver. The sensing initiator that has access to the sensing measurement data can transmit the sensing measurement data to a service provider (SP) or service consumer via the network, or derive the sensing results on its own.

For example, a sensing responder participates in a sensing measurement process (e.g., a process using PDSCH, PDCCH, PUSCH, PUCCH, SL-SCH, etc.). A sensing responder can act as a sensing transmitter, a sensing receiver, or both a sensing transmitter and a sensing receiver. If a sensing responder acts as a sensing receiver, it can access the sensing measurement data.

For example, a sensing transmitter may transmit a sensing signal (e.g., CSIRS, CSI-IM (CSI for interference management), DMRS, PTRS, or SRS) that is affected by the target or the environment of interest for the purpose of sensing.

For example, the sensing receiver receives the affected sensing signals and reports the sensing measurement data (e.g., PDSCH, PUSCH, SL-SCH, etc.) to the sensing initiator as needed, and the sensing receiver may also access the sensing measurement data.

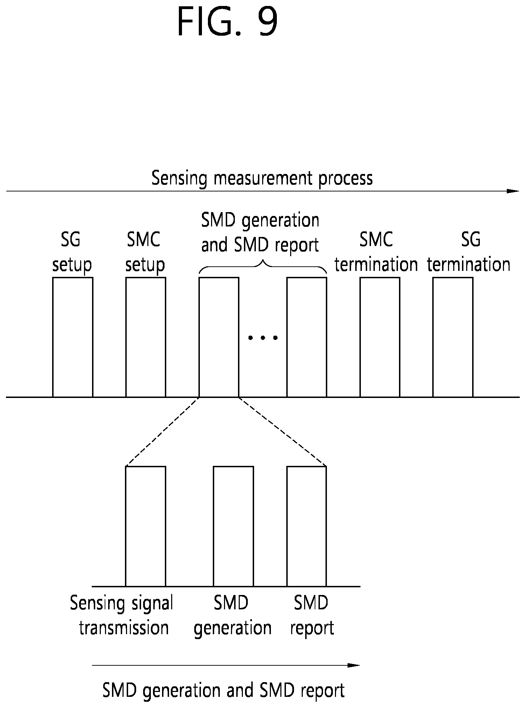

The sensing measurement process is described below, with reference to the example in FIG. 9.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 9** **illustrates an example of a sensing measurement process.**

In the example of FIG. 9, SG stands for Sensing Group. SMC stands for Sensing Measurement Configuration. SMD stands for Sensing Measurement Data.

According to the example of FIG. 9, the sensing measurement process may include one or more of the following steps:
1. If necessary, sensing group (SG in Fig. 9) configuration and sensing group update (e.g., changes to an existing sensing group)
2. sensing measurement configuration (SMC) configuration and SMC update (if necessary)
3. Sensing measurement data (SMD) generation and SMD reporting. SMD generation and reporting may include:
   Sensing signal transmission;
   Sensing measurements for sensing measurement data; and/or
   Sensing measurement data reporting, if required.
4. Sensing measurement configuration termination
5. Sensing group termination

Some of the steps in the above five steps may be repeated, as illustrated in the example of FIG. 9. Some steps may be performed together. For example, the steps of setting up the sensing group and the steps of setting up the SMC may be designed for a single iteration. Optionally, after a single iteration, one or more additional iterations of sensing group updates or one or more additional iterations of SMC updates may follow, if necessary.

For the sensing initiator, there may be different devices in different modes (e.g., sensing idle mode or sensing active mode for the sensing initiator). For these devices, the sensing initiator may consider two conditions before starting the sensing measurement process.

Hereinafter, idle mode (or state) and active mode (or state) can be interpreted as sensing idle mode and sensing active mode for the sensing initiator, respectively (NOTE: A device (e.g., UE or base station) in sensing idle mode for sensing initiator A can be in sensing active mode for another sensing initiator).

Depending on the type of sensing measurement process, during the idle mode of the responders, each candidate (or potential) responder can periodically wake up to check whether there is data to receive from the first initiator. Alternatively, each candidate (or potential) responder can remain completely idle without expecting data from the first initiator while monitoring or measuring the data of other responders. Note that the fact that a device such as a UE does not participate in the sensing measurement process does not mean that the device is not performing basic communication. In the case of a sensing service, depending on the user (or device such as UE, etc.), the device may be set to not participate in the service during specific time periods or at specific locations. Alternatively, the user (or device such as UE, etc.) may choose not to participate in a specific service. Or, while monitoring, measuring, or receiving data from a second initiator that has completed other sensing group settings, each candidate (or potential) responder may be completely idle and not expect data from the first initiator.

For example, a responder may be considered in idle mode for the first initiator, but in active mode for the second initiator or responder. While the candidate responders are in active mode, where information can be passed over the control channel (CCH, e.g., PDCCH, SLCH), the initiator transmits information according to a predefined time interval.

If the information transmitted by the initiator indicates that there is data to be received, the candidate responder initiates a sensing measurement process to join the group. Assuming that an active link has already been established between the initiator and the responder, the initiator can obtain information corresponding to the link quality from the potential responder, such as channel state information based on CSI-RS and CSI-IM, interference information, etc. The initiator may also perform a process to obtain link quality (e.g., wireless link quality between the candidate responder and the initiator) from the candidate responder prior to participate in the sensing measurement process.

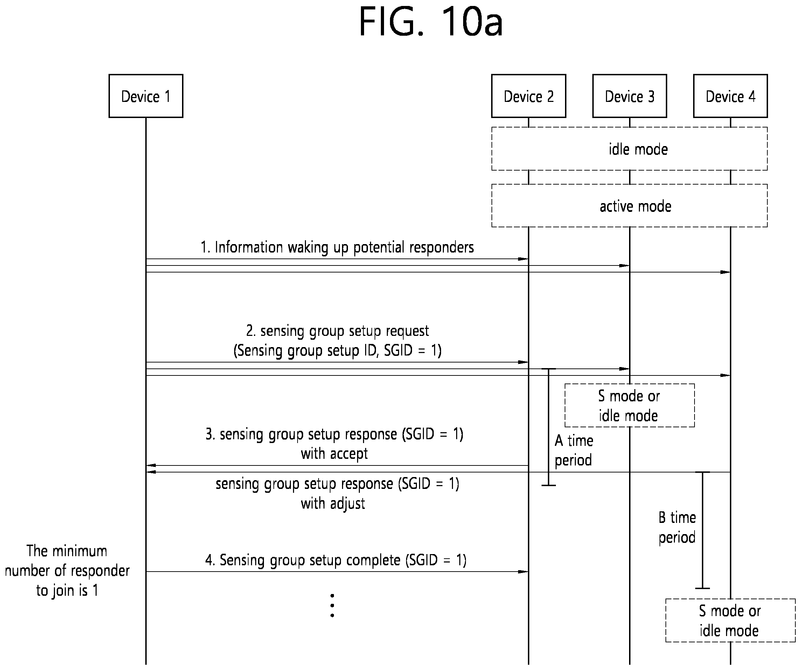

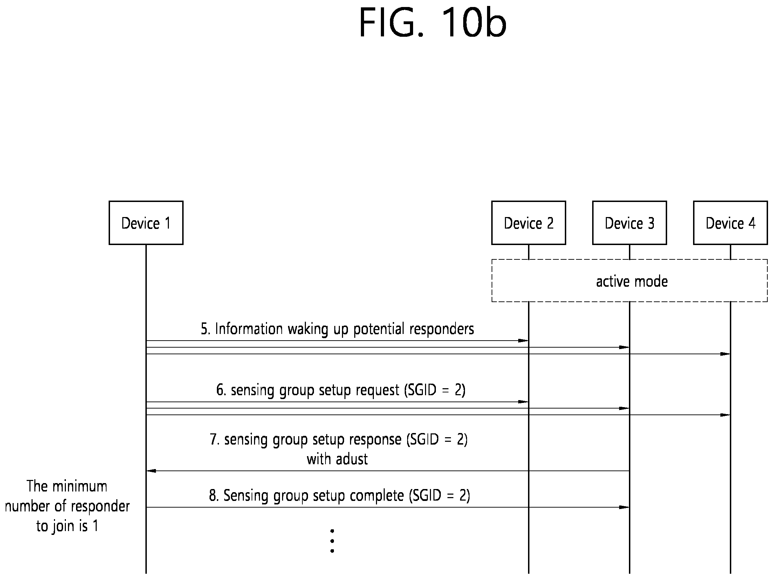

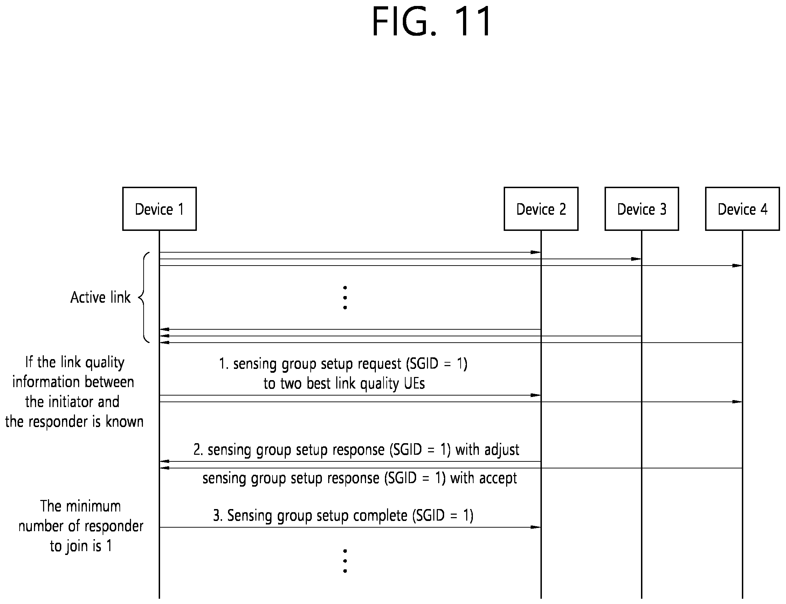

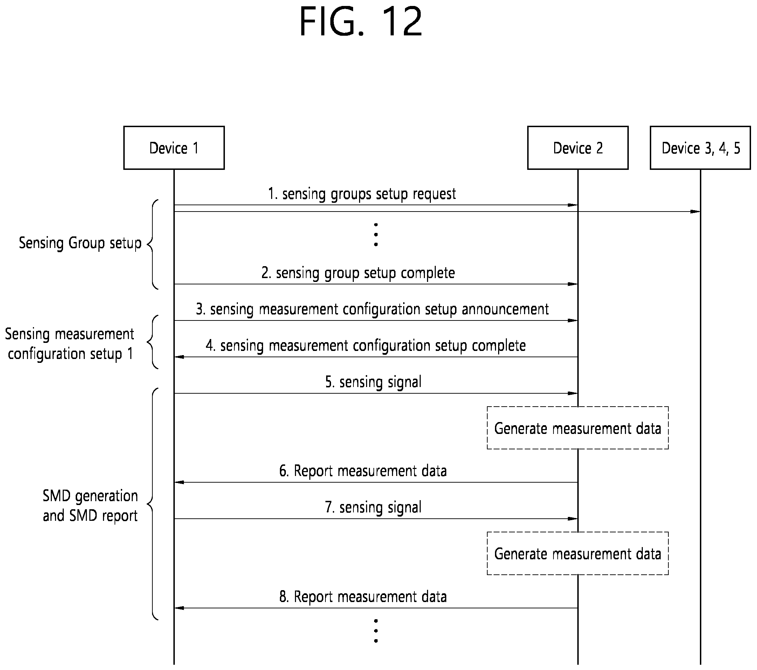

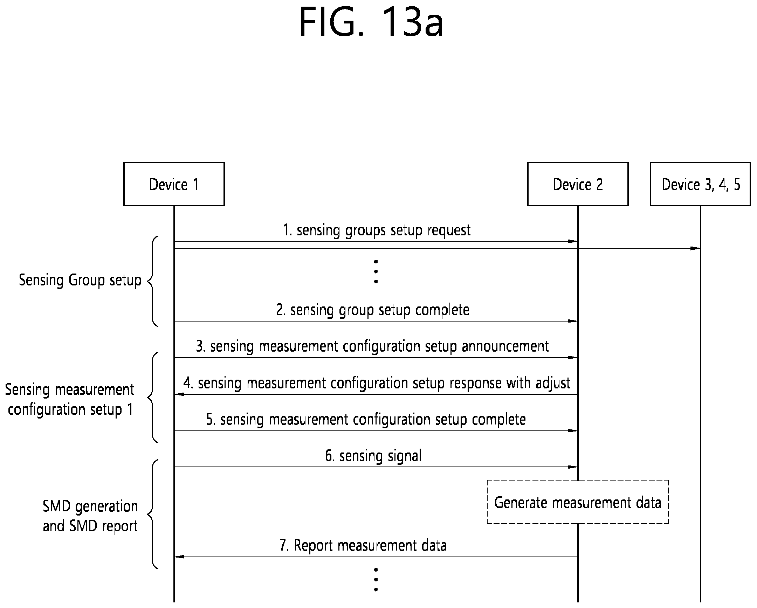

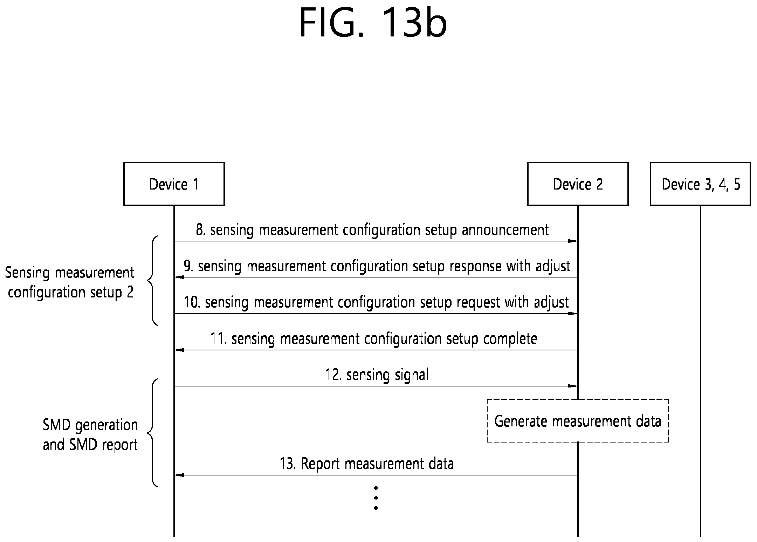

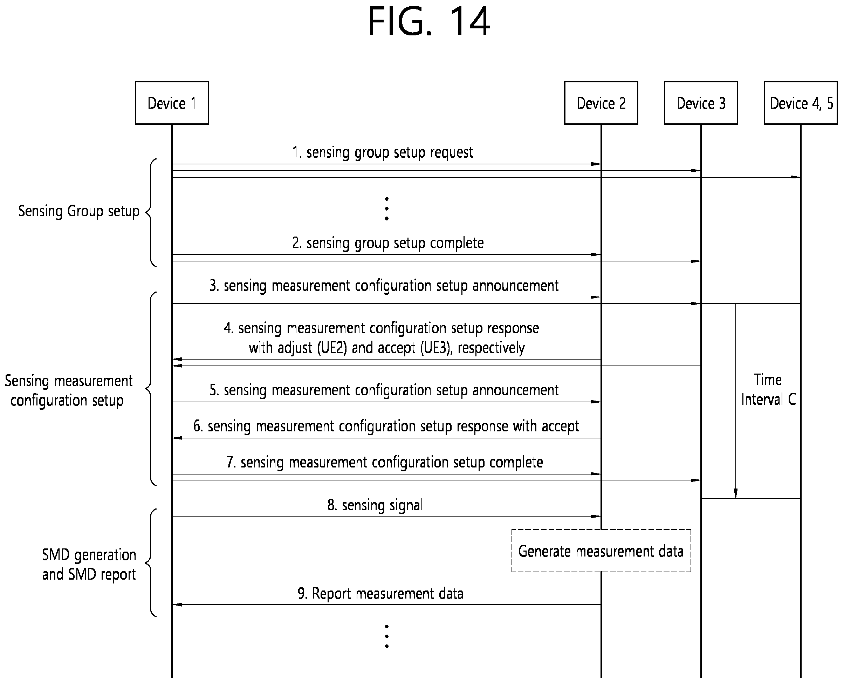

To start the sensing measurement process, actions such as the examples below can be performed. Note that the numbers i) through v) below are for illustrative purposes only and do not imply the order in which these actions are performed:
i) The initiator transmits sensing group setup request information. Here, the sensing group setup request information may include a first sensing group setup ID. For reference, the operation of the initiator transmitting the sensing group setup request information may also be applied to step 2 in FIG. 10a and FIG. 10b, step 1 in FIG. 11, step 1 in FIG. 12, step 1 in FIG. 13a and FIG. 13b, and step 1 in FIG. 14. For example, the responders may decide to participate in the sensing group based on the sensing group ID determined at this time. The sensing group setup ID may be jointly encoded with a part of the sensing group setup request information (e.g., CRC scrambled by the sensing group setup ID). The sensing group setup request information may include a minimum number of responders. For example, the minimum number of responders may be used to determine the number of transmitters that transmit sensing signals. Depending on the type of sensing service, the initiator's upper layer or network may determine how large a sensing group is required, and the minimum number of responders may be determined based on this determination. The minimum number of responders may be configured as RRC parameters (e.g., common RRC parameters or UE-specific RRC parameters). Here, if gNBs participate as responders in the sensing measurement process, RRC UE-specific parameters (e.g., RRC responder/receiver parameters) may be used/interpreted for gNBs. If no threshold is defined, the threshold may be 1 or equal to a specific value. The sensing group setup request information may include capabilities required of the responder. The required capabilities may be composed of RRC parameters (e.g., RRC common parameters or RRC UE-specific parameters). Before performing sensing group termination by the initiator or responder(s), the sensing group setup request information may remain unchanged. Before performing sensing group termination by the initiator or responder(s), the parameters set by RRC common or RRC UE-specific may remain unchanged.
ii) The responder responds to the sensing group setup request information and transmits sensing group setup response information including the first sensing group setup ID. The sensing group setup response information may be transmitted in the first type of DCI format. The sensing group setup response information may include a state that accepts joining under specific conditions, a state that rejects joining, or a state that adjusts joining. If the responder decides not to respond to the sensing group setup request information, the responder may transition to Mode A, where the corresponding values may be configured by RRC common or RRC UE-specific parameters. Mode A may be a method for supporting various levels of idle mode. Mode A may be a first mode that allows preparation for the next task while reducing power consumption. One of the levels of mode A may be how often/how long the responder is activated. For example, one of the responder candidates may decide to enter mode A. Using Mode A can reduce the power consumption of this candidate responder. Additionally, Mode A can wait for receiving information for future sensing measurement processes even if it is not currently joined to a sensing group. The receiving information may include settings related to the sensing group that the responder is expected to leave or terminate. For example, a responder in mode A may be a responder that is set not to participate in the sensing measurement process during a specific time period or at a specific location. Furthermore, information about this state may be known only to the responder. Upon receiving a state of adjustment from a responder with specific conditions, the initiator decides whether to accept the adjusted conditions.
iii) The initiator may receive the sensing group setup responder information within the first time period (or first timer). The value of the first time period can be fixed or set to one of the values in a predefined set as a single capability. The value of the first time period can be set by RRC common or RRC UE-specific parameters. For sensing purposes, the first time period is set based on values or a set of predefined values according to the sensing object or the environment of interest. For example, the initiator waits for the sensing group setup response information within the A time period and performs the following steps with the response information received from the responder. For reference, the first time period and the A time period may refer to the same time period, and may refer to the A time period in the examples shown in FIGS. 10a and 10b. The value of the first time period may be set differently depending on the information in the response information. For example, if the initiator is in the accept state, it may wait for the sensing group setup response information within the first value of the first time period. For example, if the initiator is in the adjustment state, the sensing group setup response information may be waited for within the second value of the first time period. The two different values may provide authority to responders having a specific state (e.g., acceptance).
iv) If necessary, the initiator may check that the number of responders participating is equal to or greater than the first threshold (e.g., minimum number of responders). The first threshold may be a fixed value or one of a predefined set of values. For sensing purposes, the predefined set of values may be set differently depending on the sensing object or the environment of interest. If no threshold is defined, the threshold may be, for example, 1 day. As in the above example, if different values are set for the first time interval and the number of response information is less than the first threshold, the initiator waits until the longest value is obtained during the first time interval. By the end of the first period, the initiator must receive response frames from all candidate responders. However, the initiator may not ultimately satisfy the predefined conditions (e.g., the number of responders exceeding the first threshold). In such a case, in order to find a responder, the initiator may retransmit the sensing group configuration request information up to a predefined number of times, R. R may be configured as an RRC common parameter or an RRC UE-specific parameter.
   If no value is set, R can be set to 1, in which case the initiator can only transmit one sensing group setup request information. Otherwise, the initiator stops the sensing group setup. Alternatively, the initiator performs the next step with a limited number of sensing responders under specific conditions without delaying the sensing measurement process.
v) The initiator may transmit sensing group setup completion information including the first sensing group setup ID to one or more responders. Here, one or more responders are responders that responded with an accept status or adjust status. If the number of responders is greater than the first threshold, the initiator selects responders to transmit the sensing group setup completion information. For example, from the perspective of efficient use of resources and power saving, the initiator may select the responder. If the responder does not receive the sensing group setup completion information within a second time period (e.g., B time period in Fig. 10a and Fig. 10b) that may be configured by RRC common or RRC UE-specific parameters, the responder may enter C mode. Mode C can be in various levels of idle mode, where mode C can be in a state where it can prepare for the next task while consuming less power. One of the levels of mode C can be the frequency/time when the responder is in active mode. For example, one of the candidate responders may decide to remain in mode C without receiving the sensing group setup completion information from the initiator. Even if the initiator does not allow participation in the current sensing group, candidate responders waiting to receive information about the sensing measurement process can save power based on Mode C. The received information may be sensing group setup-related information transmitted by a responder expected to withdraw from or terminate the sensing group in which it is participating. Otherwise, a responder without sensing group setup completion information stops the sensing group setup. The following example may apply to sensing group setup completion information:
   v-a) Sensing group setup completion information may be transmitted when each corresponding link between the initiator and responder has completed negotiation. The sensing group setup completion information may be sent from either the initiator or the responder.
   v-b) Sensing group setup completion information can be transmitted when all negotiations between the initiator and the responder are complete. When all negotiations between the initiator and the responder are complete, the initiator can transmit the sensing group setup completion information.
   v-c) Negotiations between the initiator and responder to establish a sensing group may be processed within a specific time interval.

The specific time interval may be included in the first sensing group setup request information along with the first setup ID.

The specific time interval may be set by RRC common or RRC UE specific parameters.

The sensing group setup complete information should be sent within a specific time interval.

v-d) If there is a specific time interval, the following description may apply. When the first sensing group configuration request information is transmitted, a timer for the specific time interval starts.

For example, the initiator and/or responder may start a timer. A specific time interval may include a predefined offset value. When the sensing group setup completion information is transmitted (or received), the timer is stopped. For example, the following example may also apply:
- For example, when the initiator transmits sensing group configuration completion information in response to the responder's sensing group configuration response, the timer is stopped; and/or
- During negotiation, the responder transmits sensing group setup completion information in response to the adjusted sensing group parameters set by the initiator.

When the timer expires, the following examples may apply:
- The initiator may finalize the sensing group setup and proceed to the next step of the sensing measurement process with the responders who have completed the sensing group setup. For example, the next step may be the step of configuring the SMC setup.

The Initiator may finalize the sensing group setup process and proceed to the next step in the sensing measurement process with the responder that has completed the sensing group setup. For reference, the following examples may be applicable for a sensing group setup.
- To further work with a Sensing Group setup, the initiator may update the information about Responders for the Sensing Group with the first Sensing Group setup ID. One or more Responders may join or leave a Sensing Group for any reason. Note that updating or terminating a Sensing Group may also be performed based on the first threshold in the previously described example. If the number of responders is equal to or greater than the first threshold, the entire request-response-completion process described in the above example may not be repeated.
- A responder may participate in one or more sensing groups, and before the end of a sensing group termination with a first sensing group establishment ID, a sensing group establishment with a second sensing group establishment ID may be initiated for further work on the sensing group setup. For example, there may be an overlap in the time when the sensing group setup with the first sensing group setup ID and the sensing group setup with the second sensing group setup ID are performed.
- When the number of responders becomes below the first threshold, the initiator can proceed to terminate the sensing group setup.

Hereinafter, with reference to the examples shown in FIGS. 10a and 10b and the example shown in FIG. 11, examples of procedures related to sensing group setup are described. Examples based on the operation of sensing groups configuration described above based on various examples are shown in FIGS. 10a, 10b, and 11.

For reference, some or all of the devices shown in FIGS. 10a and 10b to 16 may be interpreted as UE, gNB, or other 3GPP entities. Furthermore, in various examples of the present disclosure, some or all of the devices may be interpreted as UE, gNB, or other 3GPP entities. In Figures 10a and 10b to 16, device 1 may be the initiator. Devices 2 to 5 may be responders (or candidate responders). For example, device 1 may be the initiator and the transmitter. The remaining devices (devices 2 to 5) may be potential responders and/or receivers, or determined responders and/or receivers. For example, in the various examples below, devices 1 to 5 may all be UEs, device 1 may be a gNB, and devices 2 to 5 may be UEs. This is merely an example, and devices 1 to 5 described in various examples of the present disclosure may be interpreted independently as UE, gNB, or other 3GPP entities.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 10a** **and** **10b** **illustrate a first example of a procedure for setting up a sensing group according to one embodiment of the present disclosure.**

The examples in FIGS. 10a and 10b start with the assumption that the candidate responders are in idle mode. Device 1 is the initiator, and devices 2, 3, and 4 are candidate responders in idle mode. When devices 2 through 4 are in active mode, devices 1 and 2 through 4 may be in a state where they have shared information. For example, devices 1 to 4 may already be in the active state and may have exchanged one or more pieces of data before starting the sensing measurement operation. Therefore, devices 1 to 4 may already share information such as channel status with each other.

Of note, steps 5 through 8 of FIGS. 10a and 10b may optionally be performed.
1. Device 1 may transmit information to devices 2 to 4 to wake up potential responders (e.g., candidate responders). For example, device 1 may transmit information to notify that there is data to be received in response to a candidate response. When step 1 is performed, devices 2 to 4 do not return to idle mode. Note that in various examples of the present disclosure, active mode may be a mode in which devices wake up as set by a gNB (e.g., device 1 may be a gNB) for devices 2 to 4. The information for waking up potential responders may be information that prevents devices 2 to 4 from returning to idle mode while they are in active mode. In other words, device 1 may perform step 1 knowing that devices 2 to 4 are in active mode. Alternatively, the information transmitted by device 1 in step 1 may be information that switches devices 2 to 4 to the active mode. In this case, devices 2 to 4 may become active after receiving the waking up information. The description of the information for waking up potential responders may be applied equally to the entire present disclosure.
2. Device 1 may transmit a sensing group setup request message to Device 2 to UE 4. The sensing group setup request message may include a sensing group setup ID. This ID may be set to Sensing Group ID (SGID) = 1. For example, when devices 2 to 4 are in active mode, device 1 can transmit sensing group setup request information with SGID (Sensing Group setup ID) set to 1 to devices 2 to 4. In order to confirm whether the responders will join the sensing group with SGID set to 1, device 1 can transmit sensing group setup request information.

Device 2 to Device 4 can decide whether to join the sensing group with SGID set to 1 after receiving the sensing group setup request message.

For some reason, device 3 may not participate in this sensing measurement process and may be in S mode (e.g., idle mode for all initiators or responders) until the next scheduled active mode. Alternatively, S mode may be a different level of mode than idle mode. For example, a UE in S mode may be in sensing idle mode for the sensing initiator device 1, but in sensing active mode for any other sensing initiator or any responder.

3. The initiator can receive the sensing group setup response information with SGID set to 1. For example, the initiator may receive the sensing group setup response information, along with other status information such as acceptance or reconciliation, within a time interval A.

For example, in the example of FIG. 10a and FIG. 10b, device 3 does not transmit sensing group configuration response information to device 1 because device 3 is in S mode.

For example, Device 2 may transmit a Sensing Group Setup response with SGID set to 1 to Device 1 with the information that it accepts.

For example, device 4 may transmit sensing group configuration response information with the information related to adjustment with SGID set to 1, to device 1. Here, specific examples of adjustment will be explained in the example of FIG. 11 below. That is, the explanation of adjustment according to the example of FIG. 11 can be applied identically throughout the present disclosure.

4. Device 1 may transmit sensing group setup completion information to one or more of the responders who sent sensing group setup response information based on the minimum number of responders required for the sensing measurement process. For example, device 1 may transmit sensing group setup completion information including accept status information to responders who will join the sensing group. For example, device 1 may not transmit sensing group setup completion information to responders who will not join the sensing group, or may transmit sensing group setup completion information including reject status information.

For example, in the examples of FIGS. 10a and 10b, assume that the minimum number of responders required for a sensing measurement process based on a sensing group with SGID set to 1 is 1. In this case, the initiator may transmit the information related to the completion of configuring the sensing group with SGID set to 1 to the device 2 along with the accept status information.

During the B time slot, UE4 can wait for information to be received about the completion of setting up a Sensing Group with SGID set to 1. If this information is not received during the B time period, UE4 may move to S mode until the next scheduled active mode.

Device 1 can perform a sensing measurement procedure with a sensing group whose SGID is set to 1.

Before a Sensing Group with SGID set to 1 is terminated, the initiator may initiate a Sensing Group setup with SGID set to 2.

Steps 5 through 8 below provide an example of the procedure for setting up a sensing group with an SGID of 2. If Device 1 does not initiate the procedure to set up a sensing group with SGID set to 2, Steps 5 through 8 may be omitted.

5. device 1 can transmit information to devices 2 through 4 to wake up potential responders. Upon receiving this information, devices 2 through 4 do not return to idle mode. In another example, device 2 may already be in active mode, while devices 3 and 4 may be in idle mode or S mode. In this case, devices 3 and 4 may enter active mode after receiving the above information.

6. Device 1 can transmit the sensing group configuration request information with SGID set to 2 to devices 2 through 4.

UE2 to device 4 can decide whether to join the sensing group with SGID set to 2.

7. device 3 can transmit a sensing group setup response message with SGID set to 2 to device 1 with the adjust status information.

8. the device 1 may determine, based on the minimum number of responders required for the sensing measurement process, whether to transmit the sensing group setup completion information to one or more of the responders that sent the sensing group setup response information.

For example, in the examples shown in FIGS. 10a and 10b, assume that the minimum number of responders required for the sensing measurement process based on the sensing group for which SGID is set to 2 is 1. In this case, the initiator can transmit the sensing group configuration completion information for which SGID is set to 2 and the accept status information to device 3.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG.11** **shows a second example of a procedure for setting up a sensing group according to one embodiment of the present disclosure.**

In the example shown in FIG. 11, it is assumed that there are a sufficient number of responders to satisfy the minimum number of responders for the sensing measurement procedure (e.g., in the example shown in FIG. 11, the minimum number of responders is set to 1). The example shown in FIG. 11 starts with active links already established between initiators and responders.

Before starting the sensing measurement process, the initiator may perform a process to obtain link quality from candidate responders. Note that, in the examples of FIGS. 10a and 10b, the process of obtaining link quality may be performed before step 1 is performed or before step 5 is performed.

1. The initiator may transmit sensing group setup request information to specific responders with good link quality based on the link quality provided by candidate responders. For example, the initiator may transmit sensing group setup request information to specific responders with good link quality (e.g., device 2 and device 4 in the example in Fig. 11) by considering the link quality provided by candidate responders. The SGID of the sensing group setup request information may be set to 1.

2. Device 1 may receive sensing group configuration response information. For example, the initiator can receive sensing group configuration response information indicating acceptance (i.e., acceptance of the request) or sensing group configuration response information indicating coordination (i.e., a counterproposal to coordinate the initiator's request). For example, device 1 may receive sensing group configuration response information indicating acceptance from device 4. For example, device 1 may receive sensing group configuration response information indicating adjustment from device 2.

3. In the example in Figure 11, assume that the minimum number of responders required for the sensing measurement process is 1. The initiator may transmit the information of the completion of the sensing group setup with the SGID set to 1 to the device 4 with the status of acceptance.

In the example shown in FIG. 11, the description of S mode in FIGS. 10a and 10b applies equally to the operation of switching UE not participating in the current sensing group to S mode.

In the following, we describe an example of setting up a sensing measurement configuration (SMC). After a sensing group has been established, such as in the examples of FIGS. 10a and 10b and/or FIG. 11, a setup for sensing measurements may be set up.

After the sensing group is successfully set up, the setup of the sensing measurement setup follows. The SMC setup is initiated by transmitting SMC setup announcement information to the responders who joined the sensing group set up in the above description of the present disclosure.

Various examples can be applied to the SMC settings. For reference, i) to v) below are numbers used for explanatory purposes and do not indicate the order in which the following operations are performed:
i) The SMC setup announcement information may include a sensing group setup ID (e.g., as shown in Fig. 10a and Fig. 10b, and as shown in Fig. 11, an ID for identifying a group). The SMC setup announcement information may include a first SMC setting ID. The first SMC setup ID may be encoded jointly with a part of the SMC setup announcement information (e.g., CRC scrambled with the first SMC setting ID). When an SMC setup ID is assigned to a sensing group, this announced information may remain the same until the corresponding SMC is terminated.
ii) SMC setup notification information may include the type of sensing measurement data to be measured. Sensing measurement data (SMD) may include channel state information such as average Signal to Noise Ratio (SNR) related information, channel quality related information, precoding matrix related information, layer related information, and rank related information. The type of sensing measurement data can be set using RRC parameters (e.g., RRC common parameters or RRC UE-specific parameters). The type of sensing measurement data can be transmitted in the first type of DCI format. The first SMC setup ID can be CRC scrambled in the first type of DCI.
   Different SMC setup IDs may be assigned to different sensing measurement data or different sensing measurement data sets. In other words, SMC setup IDs are IDs assigned to identify different SMDs or different SMD sets. For example, an SMC setup ID may be assigned to a single sensing measurement data. For example, an SMC setup ID may be assigned to a group of one or more sensing measurement data. In addition, sensing measurement data sets may be configured differently depending on the purpose. For example, in the case of sensing measurement configurations for Sidelink, a subset of the sensing measurement data assigned to DL may be required.
iii) SMC setup notification information may include the frequency at which sensing measurement data is generated. This is because the measurement interval may vary depending on the type of sensing measurement data. Different types of sensing measurement data may be measured at different intervals. Here, the interval can be set for each sensing measurement data to be measured. The following examples may apply to the interval of sensing measurement data:
   - Intervals may be periodic. Periodic interval values may be configured as RRC parameters (e.g., RRC common parameters or RRC UE-specific parameters).
   - The interval may be non-periodic due to a first event. Here, the first event may be SMD request information about when to measure or where to measure. The conditions for the first event in the non-periodic mode may be configured as RRC parameters (e.g., RRC common parameters or RRC UE-specific parameters); and/or
   - The interval may be semi-permanent. Like rank, it requires continuous wireless resource allocation with a relatively small amount of data. For example, unlike Channel Quality Indicator (CQI), which changes frequently depending on changes in channel status, rank may change relatively insensitively to changes in channel status. The corresponding wireless resource allocation can be transmitted in the second type of DCI format. The first type of DCI format and the second type of DCI format can be the same.
iv) SMC setup notification information may include how often/what the sensing measurement data to be reported. For example, the sensing transmitter, sensing responder, sensing initiator, or sensing receiver may not report every time a measurement is made. For example, the sensing transmitter, sensing responder, sensing initiator, or sensing receiver may perform specific processing after measurement and then report at a specific time. Different sensing measurement data may be reported at different intervals. The interval for each reported measurement data may be set. For example, the interval at which measurement data is reported may be referred to as the reporting interval. When sensing measurement data is reported, this data may be the most recently measured sensing measurement data. Alternatively, when sensing measurement data is reported, this data may be the average value of one or more sensing measurement data. The following examples may apply to the reporting interval:
   - For efficient resource utilization, different reporting intervals are required for different sensing measurement data. For example, in the case of rank-related sensing measurement data, if four channel quality-related sensing measurement data are generated, they can be reported only once.
   - Intervals may be periodic. Periodic interval values may be configured as RRC parameters (e.g., RRC common parameters or RRC UE-specific parameters).
   - The interval may be driven non-periodically by a first event. Here, the first event may be SMD request data for the measurement time or location. In the non-periodic mode, the condition for the first event may be configured as an RRC parameter (e.g., a common RRC parameter or a UE-specific RRC parameter).
   - The interval can be semi-permanent. Like rank, a relatively small amount of data is required for continuous wireless resource allocation. The wireless resource allocation can be transmitted in the second type of DCI format. The first type of DCI format and the second type of DCI format can be the same.
v) Upon receiving the SMC setup announcement information, in response to this information, the responder may transnut SMC setup completion information to the initiator. Here, the responder may be a responder that participated in the sensing measurement process when establishing the sensing group. For example, in the example of FIG. 12, the initiator (e.g., device 1) (e.g., UE or BS) may verify that the responder has correctly received the corresponding SMC setup information. For example, the transmitting of SMC setup completion information by the responder may indicate that the responder accepts the configured parameters for the sensing measurement set by the initiator.
vi) Upon receiving the SMC Setup Announcement information, the responder may transmit the SMC Setup Response information in response as shown in Figure 12. Here, the responder is the responder that participated in the sensing measurement process during the sensing group setup.

The following explanations apply to SMC setup response information.

SMC Setup response information can include the following statuses The SMC Setup Response information may be delivered in a third type of DCI format. The first SMC Setup ID may be CRC scrambled in the third type of DCI format. Examples of the statuses included in the SMC Setup response information may include the following
- Accept state may be a state in which the parameters configured for the sensing measurement configured by the initiator are accepted.
- Reject state may be a state in which the parameters configured for the sensing measurement configured by the initiator are rejected.
- The state of adjust may be a state of adjusting to negotiate one or more configured parameters for the sensing measurement established by the initiator. For example, one or more parameters for the sensing measurement may be proposed by a responder in the SMC setup response information. The proposed one or more parameters may be particularly likely to have a better awareness of the context of the mobility of the responder.

For the SMC setup completion information, the following examples may apply.

The initiator may transmit SMC setup completion information to one or more responders. The SMC setup completion information may be described in the following examples:
- The initiator may transmit SMC setup completion information to the responder in the Accept state. This may mean that the initiator confirms that the responder has accepted the configured parameters for the sensing measurement set by the initiator.
- The initiator may transmit SMC setup completion information to the responder in the adjustment state. This may mean that the initiator has accepted the parameters configured for the sensing measurement set by the responder.
- The initiator may transmit SMC setup completion information to the responder in the rejected state. This may mean that the initiator has confirmed that the responder has rejected the parameters configured for the sensing measurement set by the initiator.
- To conserve resources, the initiator may not transmit SMC establishment completion information to a responder in the reject state.

vii) further negotiations between the initiator and the responder may be processed to establish configuration parameters for the sensing measurement.

When each of the corresponding links between the initiator and responder has completed negotiation, SMC setup completion information may be sent. The SMC establishment completion information may be sent from either the initiator or the responder.

SMC setup completion information can be transmitted once all negotiations between the initiator and responder are complete. Once all negotiations between the initiator and responder are complete, the initiator may transmit SMC setup completion information.

viii) Negotiation to set configuration parameters for sensing measurements between the initiator and responder can be handled within a specific time interval (e.g., time interval C in Figure 14).

Specific time intervals can be included in the first SMC setting information together with the first setting ID.

The specific time interval may be configured by RRC common parameter or RRC UE specific parameters.

The SMC setup completion information shall be transmitted (or received) within the specific time interval (e.g., time interval C in FIG. 14).

ix) For the specific time interval (e.g., time interval C in FIG. 14), the following illustrative description may apply:
- When the SMC setup information is transmitted, a timer for the specific time interval may be started. The timer may start from an initial value (e.g., 0).
- The specific time interval may include a predefined offset value.
- Upon transmitting or receiving SMC setup completion information, the timer may be stopped and reset to its initial value. For example, a responder may transmit a Sensing Measurement setup Response information, including adjustments, to an Initiator. In response to this information, if the Initiator transmits Sensing Measurement Setup Complete information, the Timer may be stopped and reset to its initial value. For example, during negotiation, the responder transmits the sensing group setup complete information in response to the adjusted sensing group parameters set by the initiator.
- When the timer expires, the following description may apply, as illustrated in the example below.

The initiator may finalize the SMC setup and perform the next sensing measurement process with the responder that has completed the SMC setup. The next step may be to measure and report the sensing measurement data.
- The description of a particular time interval (e.g., time interval C in FIG. 14) may apply equally to FIG. 12 and FIGS. 13a and 13b.

x) To perform additional tasks related to SMC setup, the initiator can update SMC-related information. One or more SMCs for sensing measurement data can be updated with a new interval for the measurement time. The remaining configuration for sensing measurement data can remain the same. One or more SMCs for sensing measurement data can be updated with a new interval for the reporting time. The remaining configuration for sensing measurement data can remain the same.

xi) For additional sensing measurements, SMC setup using the second SMC setting ID may be started before the sensing measurement using the first SMC setting ID is completed. A single responder may participate in more than one SMC setup.

Below, with reference to FIGS. 12 to 14, various examples related to sensing measurements are described. For reference, in the examples of FIGS. 12 to 13, the procedures related to sensing group setup (e.g., steps 1 and 2 in FIGS. 12 to 14) may be performed as described in the examples of FIGS. 10a and 10b and/or the example of Figure 11.

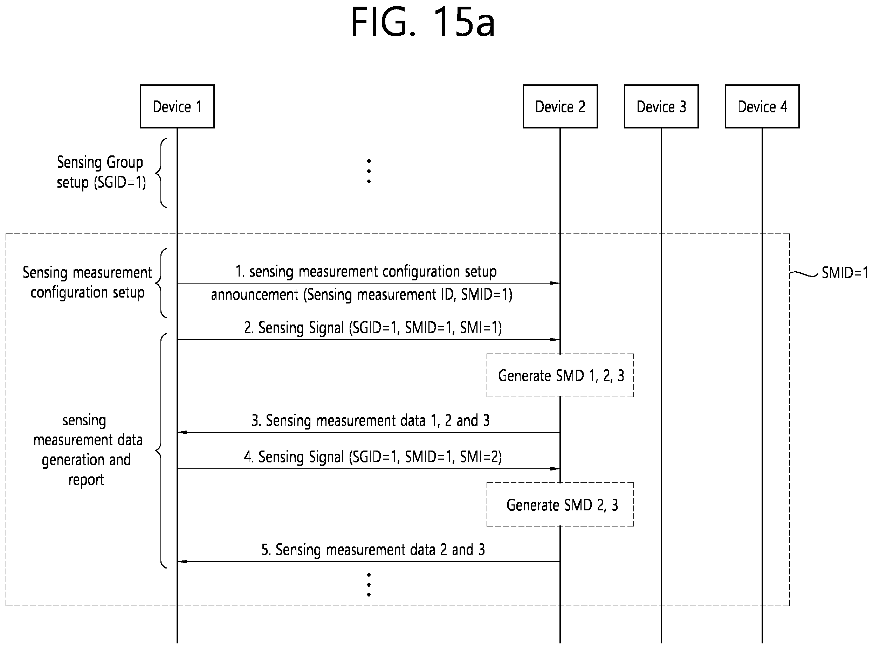

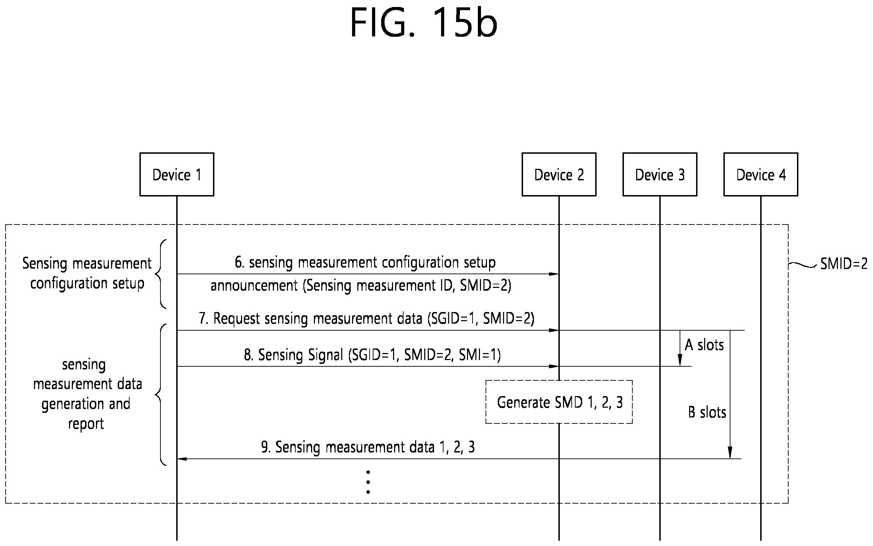

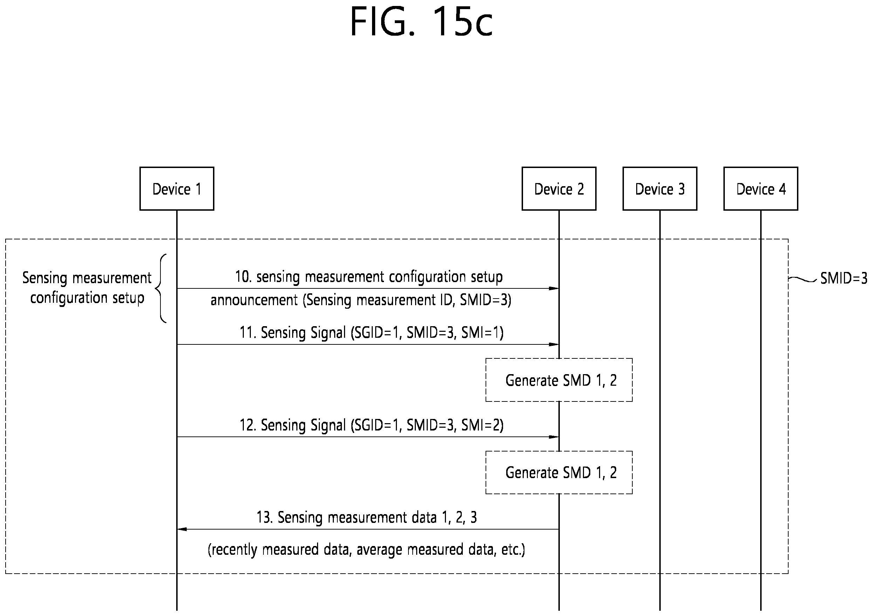

For reference, in the examples shown in FIGS. 12 to 14, the same explanations given in FIGS. 15a to 15c apply to the operations of transmitting sensing signals, generating measurement data, and reporting measurement data. For example, specific examples of the operation of transmitting a sensing signal, the operation of generating measurement data, and the operation of reporting measurement data may follow the explanations in FIGS. 15a to 15c.

After successful SMC setup, sensing measurement data generation and reporting can be performed. An example of the general operation of sensing measurement data generation and reporting is described above with reference to Figure 9. Once the sensing group configuration and SMC setup are complete, the transmitter can transmit sensing signals. Additionally, two or more transmitters can transmit sensing signals simultaneously. The receiver or initiator can trigger one or more transmitters to transmit sensing signals (or a sensing signal). The receiver measures and reports the transmitted sensing signals according to the predefined configuration set during SMC setup.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG.12** **shows a first example of a procedure related to sensing measurements according to one embodiment of the present disclosure.**
1. Device 1 may transmit the sensing group setup request information.
2. Device 1 may transmit the sensing group setup completion information.
   Steps 1 and 2 may be performed in the same manner as the examples described in FIGS. 10a and 10b and FIG. 11. The operations of step 1 and step 2 of FIGS. 12 through 14 may be performed in the same manner. Therefore, in the examples of FIGS. 12, 13a and 13b, and FIG. 14, a specific description of steps 1 and 2 is omitted.
3. Device 1 may transmit SMC setup notification information. For example, SMC setup notification information can be transmitted to responders (e.g., device 2) that have decided to participate in the sensing group. SMC setup notification information can include, for example, a Sensing Measurement ID (SMID). For example, SMC setup notification information can include SMID 1.
4. Device 2 may transmit SMC setup completion information to Device 1. For example, Device 2 may transmit SMC setup completion information to Device 1 when Device 2 decides to perform a sensing measurement based on the SMC provided by Device 1.
5. Device 1 can transmit sensing signals.
   UE2 may generate measurement data. For example, a sensing signal from Device 1 may be affected by objects and the environment around Device 1 and Device 2 on its way to Device 2. The measurement data generated by Device 2 may be used to sense objects in the vicinity.
6. Device 2 may report measurement data to device 1. Device 1 may sense objects in the vicinity based on the measurement data received from device 2.
7. Device 1 may transmit sensing signals.
8. Device 2 may report measurement data to Device 1. Based on the measurement data received from Device 2, Device 1 may sense an object in the vicinity.

UE1 may receive measurement data multiple times, as shown in the example in FIG. 12. In this case, the device 1 may sense a neighboring object based on the sensing data received once or multiple times.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS.13a** **and** **13b** **show a second example of a procedure related to sensing measurements according to one embodiment of the present disclosure.**

In the examples shown in Figures 13a and 13b, two SMC setup are shown. Each SMC setting can be performed independently. For example, SMC setup 1 and SMC setup 2 may be performed in a time-overlapping manner. For example, SMC setup 2 may not be performed. For example, SMC setup 1 may be performed after SMC setup 2 has been performed.

1~2. Explanation of steps 1~2 is skipped.

Steps 3 to 7 are examples of operations related to SMC setup 1, and steps 8 to 13 are examples of operations related to SMC configuration 2.

3. Device 1 may transmit SMC setup notification information. For example, SMC setup notification information can be transmitted to responders (e.g., device 2) that have decided to participate in the sensing group. For example, the setting notification information may include SMID 1.

4. Device 2 may transmit adjustment information and SMC setup response information to device 1. The adjustment information may be information indicating that the SMC setting notification information of device 1 is to be adjusted.

5. Device 1 may transmit SMC setting completion information. For example, if device 1 agrees with the sensing measurement based on the adjustment conditions transmitted by device 2, device 1 may transmit SMC setting completion information.

6. Device 1 may transmit sensing signals.

UE2 may generate measurement data. For example, in the process of the sensing signal from device 1 reaching device 2, it may be affected by objects and the environment around devices 1 and 2. The measurement data generated by device 2 can be used to sense objects in the vicinity.

7. Device 2 may report measurement data to device 1. Device 1 may sense objects in the vicinity based on the measurement data received from device 2.

Operations related to SMC setup 2 can be performed.

8. Device 1 may transmit SMC setup notification information. For example, SMC setup notification information can be transmitted to responders (e.g., device 2) that have decided to participate in the sensing group. For example, the setting notification information may include SMID 2.

9. Device 2 may transmit adjustment information and SMC setup response information to device 1. The adjustment information may be information indicating that the SMC setting notification information of device 1 is to be adjusted.

10. Device 1 may transmit SMC setting request information together with adjustment information. For example, device 1 may transmit such information when it wishes to adjust the conditions of the adjustment transmitted by device 2.

11. Device 2 may transmit SMC setup completion information. For example, Device 2 may transmit SMC setup completion information when Device 2 agrees to take sensing measurements based on the conditions of the coordination sent by Device 1.

Device 1 may transmit sensing signals.

UE2 may generate measurement data. For example, the sensing signal from Device 1 may be affected by objects and the environment around Device 1 and Device 2 on its way to Device 2. The measurement data generated by device 2 may be used to sense objects in the environment.

13. the device 2 may report the measurement data to the device 1. Based on the measurement data received from Device 2, Device 1 may sense objects in the vicinity.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 14** **shows a third example of a procedure related to sensing measurements according to one embodiment of the present disclosure.**

Steps 1-2. Description for steps 1-2 are skipped.

Device 2 and device 3 have joined the sensing group. 3.

Device 1 may transmit SMC setup announcement information. For example, the SMC setup announcement information may be sent to the responders (e.g., Device 2 and Device 3) that have decided to join the sensing group. For example, the setup announcement information may include the SMID 1.

4. Each of Device 2 and Device 3 may transmit SMC setup response message to Device 1.

For example, Device 2 may transmit SMC setup response information to Device 1 along with adjust information. The adjust (or modification) information may be that it wants to adjust the SMC setup announcement information of device 1.

For example, device 3 may transmit SMC setup response information to device 1 along with accept information. The accept information may be that it accepts the SMC setup announcement information from device 1.

5. Device 1 can transmit SMC setup announcement information to Device 2. The SMC setting announcement information may be information that reflects some or all of the conditions of the adjust (or modification) information sent by Device 2.

6. Device 2 may transmit SMC setup response information to Device 1 along with the accept information. The accept information may be information that the device accepts the SMC setup announcement information from device 1.

7. Device 1 can transmit SMC setup completion information to devices 2 and 3. Note that device 1 can also transmit SMC setup completion information to device 3 after step 4.

8. Device 1 may transmit sensing signals. In FIG. 14, sensing signals are sent only to device 2, but this is only an example, and device 1 may also transmit sensing signals to device 3.

UE 2 can generate measurement data. For example, in the process of the sensing signal from device 1 reaching device 2, it may be affected by objects and the environment around device 1 and device 2. The measurement data generated by device 2 can be used to sense objects in the vicinity.

UE3 may also generate measurement data. For example, a sensing signal from Device 1 may be affected by objects and the environment around Device 1 and Device 3 on its way to Device 3. The measurement data generated by Device 3 can be used to sense objects in the environment.

9. Device 2 may report measurement data to Device 1. Device 3 may also report measurement data to Device 1.

Based on the measurement data received from device 2 and/or device 3, UE1 may sense objects in the vicinity.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS.15a to 15c** **show a fourth example of a procedure related to sensing measurements according to one embodiment of the present disclosure.**

Examples of exemplary operations for SMC setup and sensing measurement data generation and reporting are shown in FIGS. 15a to 15c. In FIGS.15a to 15c, some or all of the Devices (e.g., UEs) may be interpreted as gNB or other 3GPP entities. Device 1 may act as the initiator and transmitter, while the remaining UEs may serve as potential or determined responders and receivers. Once the sensing group configuration is complete, Device 1 and Device 2 may participate in the sensing measurement process. In the examples shown in Figures 15a through 15c, Device 2 may represent a UE participating in a sensing group with an SGID of 1.

For reference, in FIGS. 15a to 15c, only device 2 is shown as participating in the sensing group, but this is for illustrative purposes only. The scope of the present disclosure is not limited to the participation of only device 2 in the sensing group.

In the examples of FIG. 15a through FIG. 15c, the procedure for a sensing group setup and the procedure for an SMC setup are shown briefly, but only for illustrative purposes. The sensing group setup procedure and the SMC setup procedure may be performed according to various examples previously described with reference to FIGS. 9 through 14.

FIGS. 15a to 15c show examples of various SMC setup.

According to the SMC setup with SMID set to 1, device 2 can measure and report sensing measurement data as shown in the following example. For example, when SMID=1, device 2 can measure and report sensing measurement data 1 every two sensing measurement instants (SMI). For example, when SMID=1, device 2 can measure and report sensing measurement data 2/3 every SMI. For example, when device 1 transmits a sensing signal, device 2 may perform measurement based on the information included in the sensing signal. For example, if the measurement data generated by device 2 is related to Channel State Indicator (CSI), device 2 may generate sensing measurement data such as RI, PMI, CQI, etc. For example, device 2 may transmit the sensing measurement data to device 1 at a different timing or through different allocated resources.
1. For example, device 1 may transmit SMC setting announcement information including information that the sensing measurement ID (SMID) is 1 to device 2 (e.g., a responder participating in a sensing group with SGID 1). SMC configuration announcement information with SMID 1 may include information instructing the measurement and reporting of sensing measurement data 1 every two SMI and sensing measurement data 2/3 every SMI.
2. device 1 may transmit a sensing signal. The sensing signal may further include one or more of an SGID, an SMID, and an SMI. Alternatively, the sensing signal may include information identifying the SGID, SMID, and SMI. The description of the sensing signal in this paragraph may be equally applicable to the examples of FIGS. 15A through 15C.

Based on the SMC corresponding to SMID 1, UE2 can perform measurements on the sensed signal. Device 2 may generate all of SMD 1, 2, and 3 for SMI=1.

Device 2 may report SMDs 1, 2, and 3. 4.

4. device 1 may transmit a sensing signal.

UE2 may perform a measurement on the sensing signal based on the SMC corresponding to SMID 1. For SMI=2, the device 2 may not generate SMD 1, but may generate SMDs 2 and 3.

5. Device 2 may report SMDs 2 and 3.

After step 3 is performed, the UE may sense nearby objects based on the SMDs 1, 2, and 3. For example, the device 1 may sense an object in the vicinity for each of the SMIs based on the received SMDs. In another example, the device 1 may sense a nearby object based on SMDs received from more than one SMI. For example, the device 1 may perform sensing based on SMD 1, sensing based on SMD 2, sensing based on SMD 3, or sensing based on at least one of SMD 1 to SMD 3. The description in this paragraph may equally apply to all cases of receiving one or more SMDs in the various examples of the disclosure.

The example of FIGS. 15a through 15c illustrates an SMC setup in which the SMID is set to 2. In this case, the device 1 may transmit sensing measurement data request information including an A slot and a B slot indicating when to generate sensing measurement data and when to report sensing measurement data, respectively. For example, the A slot may indicate a maximum time from when the sensing measurement data request information is received (or transmitted) to when the sensing measurement data is generated. For example, the B slot may indicate a maximum time from when the sensing measurement data request information is received (or sent) to when the sensing measurement data is reported. The A value or B value may be set by RRC common or RRC UE specific parameters.

6. For example, Device 1 may transmit SMC setup announcement information to Device 2 that includes the information that the Sensing measurement ID (SMID) is 2.

7. Device 1 may transmit sensing measurement data request information including when to generate sensing measurement data and when to report sensing measurement data.

8. Device 1 may transmit sensing signals.

UE2 may perform measurements of sensing signals based on the timing of SMC corresponding to SMID 2 and the generation of sensing measurement data. After receiving the SMD request message, device 2 can measure SMD 1, 2, and 3 within slot A.

9. Based on the sensing measurement data reporting timing, after receiving the SMD request message, device 2 can report SMD 1, 2, and 3 within slot B.

After step 9 is performed, the UE can sense the surrounding object based on SMD 1, 2, and 3.

Depending on the SMC setup with SMID set to 3, sensing measurement data may not be reported every time it is generated. For example, the receiver might report recent sensing measurement data or average sensing measurement data every two SMIs.

10. For example, Device 1 may transmit SMC setup announcement information to Device 2 (e.g., a responder in a sensing group with an SGID of 1) that includes information that the Sensing measurement ID (SMID) is 3. The SMC settings announcement information with an SMID of 3 may include information to report recent sensing measurement data or average sensing measurement data every two SMIs.

Device 1 may transmit a sensing signal (SMI=1).

UE2 may perform measurements on the sensing signal based on the SMC corresponding to SMID 3. Device 2 may generate SGD 1 and 2 and wait to report in the next SMI.

12. Device 1 may transmit a sensing signal (SMI=2).

UE2 may perform measurements on sensed signals based on the SMC corresponding to SMID 3. Device 2 may generate SGDs 1 and 2.

Device 2 may report SMDs 1 and 2. For example, device 2 may report based on the SMC corresponding to SMID 3. Device 2 may report recent sensing measurement data or average sensing measurement data for each of the two SMIs.

After step 13 is performed, the UE may sense an object in the neighborhood based on SMDs 1 and 2.

Of note, in the examples of FIGS. 15a through 15c, although examples of SMIDs 1, 2, and 3 are shown in one drawing, the examples associated with SMIDs 1, 2, and 3 are each independent examples. Only one of the examples associated with SMIDs 1, 2, and 3 may be performed, and the order in which they are performed may be reversed. In the examples of FIGS. 15a through 15c, SMIDs 1, 2, and 3 are illustrated to illustrate that various configurations are possible. As in the examples of FIGS. 15a through 15c, dynamic signaling may be performed for sensing measurements according to the disclosure herein.

After successful sensing measurement data generation and reporting, SMC shutdown or sensing group shutdown can be performed. In general, termination can be explicitly or implicitly performed by either the initiator or the responder.

In the case of SMC termination, the SMC may be terminated in an implicit manner, after a predefined time period in which the SMC waits for expected information. In case of explicit termination, the first information indicating the termination of the SMC may be used. The first information indicating the termination of the SMC may be sent by the initiator or transmitter, or may be sent by the responder or receiver. In this context, the first information may refer to information related to the termination of the SMC. The first information may also be referred to as termination information. The first information may include an SMC setup ID. The first information may include a sensing group setting ID. In this case, the same SMC Setup ID may be assigned to different Sensing Group IDs. The initiator may terminate the SMC for all participants simultaneously. The initiator may terminate one or more SMCs for one or more specific responders. One or more responders can also terminate their own SMCs.

For example, to indicate that all SMCs have been shut down regardless of their SMC Setup ID, the shutdown information might include the SMC Setup ID set to a specific value (e.g., F). In the example described earlier, shutdown was performed based on the SMC Setup ID. In this case, if Device 2 receives an SMC Setup ID with the SMC Setup ID set to a specific value (e.g., F), all configurations may be terminated, regardless of the SMC Setup ID value set on Device 2.

For sensing group termination, in an implicit manner, the sensing group may be terminated after a predefined time to wait for expected information. Here, the predefined value may be set by an RRC common parameter or an RRC UE specific parameter. If terminated in an explicit way, the first information indicating the termination of the sensing group may be used. The first information indicating the termination of the SMC may be transmitted by the initiator or transmitter, or by the responder or receiver. Here, the first information may refer to information related to the termination of the SMC. The first information may also be referred to as termination information. The information may include a sensing group setup ID. The sensing group may be terminated simultaneously for all participants by the initiator. The initiator may terminate one or more sensing groups for one or more specific responders. One or more Responders may terminate their own Sensing Groups. When a sensing group with SGID set to A is terminated, SMCs with SGID set to A may be implicitly terminated. The first information may include a sensing group setup ID set to a specific value (e.g., F) to indicate that all sensing groups have been terminated, regardless of their own sensing group setup IDs.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

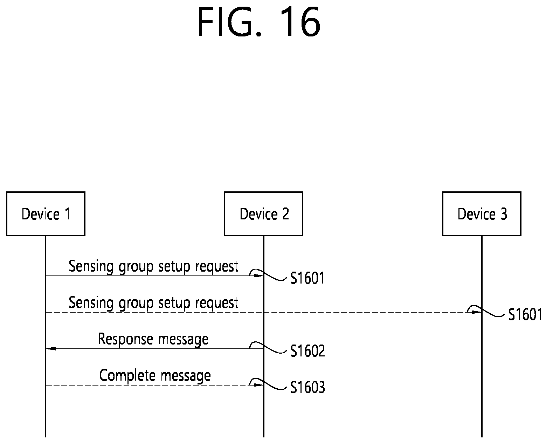

**FIG.16** **shows an example of a procedure according to one embodiment of the present disclosure.**

It should be noted that, as described above, any or all of devices 1 to 3 may be interpreted as a gNB or other 3GPP entity. Further, although devices 1 to 3 are shown in the example of FIG. 16, they are illustrative only, and the scope of the disclosure is not limited by FIG. 16. Operations according to one embodiment of the disclosure may be performed with one candidate responder or with three or more candidate responder(s). Device 1 to device 3 may perform operations according to various examples of the disclosure that are not shown in the examples of FIG. 16.

Before performing the operation according to the example of FIG. 16, the device 1 to the device 3 may perform the operation according to the example of FIGS. 5 to 9.

In step S1601, the device 1 may transmit a sensing group setup request message to one or more candidate responders. The device 1 may transmit this message to the candidate responders. Note that if only Device 2 is a candidate responder, Device 1 may not transmit a Sensing Group Setup Request message to Device 3.

Before step S1601 is performed, the device 1 may transmit waking up information to the one or more candidate responders. In this case, the candidate responders that were in IDLE mode do not return to IDLE mode after entering in ACTIVE mode.

In step S1602, the device 2 may transmit a response message to the device 1. The response message may include an acceptance, a rejection, or an adjustment.

In step S1603, the device 1 may determine whether to transmit a completion message based on the minimum number of responders in the sensing group. In other words, step S1603 may be performed optionally. For example, if the number of candidate responders that responded among the one or more candidate responders is greater than or equal to the minimum number of responders, device 1 may transmit a completion message to device 2.

If the number of candidate responders that responded is greater than or equal to the minimum number of responders, Device 1 may select the minimum number of responders to join the sensing group.

The UE1 may transmit to the device 2 sensing measurement configuration information comprising at least one of a Sensing Measurement ID (SMID), a Sensing Group ID (SGID), a type of sensing measurement data, a frequency of generation of the sensing measurement data, and/or a reporting destination and a reporting frequency of the sensing measurement data. For example, the device 1 may transmit such sensing measurement configuration information to UEs that have sent a completion message.

UE1 may transmit a sensing signal to device 2. The sensing signal may include one or more of the SMID, SGID, and SMI information. For example, UE1 may transmit a sensing signal to a set of responders including UE2. Device 2 may generate sensing measurement data based on the sensing measurement configuration information and the sensing signal.

UE1 may receive a reporting message comprising sensing measurement data from the device 2.

This statement can have a variety of effects.

For example, operations for sensing objects based on 3GPP-based signals can be defined efficiently. For example, resources can be used efficiently in the process of performing the sensing measurement process. In addition, power saving can be improved in the sensing process. For example, the operation mode, control signal, or time interval for power saving of each device can be defined effectively. And the defined information can be effectively indicated or configured.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., BM-SC, PCRF, GCSE AS, AMF, SMF, UPF, PCF, AUSF, UDM, etc.) or base station (e.g., (R)AN, NG-RAN, gNB, E-UTRAN, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a first device and comprising:
performing a registration procedure for registering a user equipment (UE) to an access and mobility management function (AMF) node,
wherein the registration procedure includes the steps of the UE transmitting a registration request message including a registration type and the AMF node transmitting a registration accept message to the UE;
transmitting a sensing group setup request message to one or more candidate responders including a second device for configuring a sensing group;
receiving a response message from the second device; and
determining whether to transmit a complete message, based on the minimum number of responders in the sensing group.

2. The method of claim 1, further comprising:
based on that the number of candidate responders that responded among the one or more candidate responders is equal to or greater than the minimum number of responders, transmitting a completion message to the second device.

3. The method of claim 2, further comprising:
based on that the number of candidate responders that responded is equal to or greater than the minimum number of responds, selecting responders to participate in the sensing group based on the minimum number of responders.

4. The method of any one of claims 1 to 3,
wherein the response message includes acceptance, rejection, or adjustment.

5. The method of any one of claims 1 to 4, further comprising:
transmitting waking up information to the one or more of the candidate responders,
based on that the waking up information is transmitted, the candidate responder being in Idle mode among the one or more candidate responders is changed to be in Active mode.

6. The method of any one of claims 1 to 5, further comprising:
transmitting, to the second device, sensing measurement configuration information including at least one of a sensing measurement ID (SMID), a sensing group ID (SGID), a type of sensing measurement data, sensing measurement data generation frequency, and/or a reporting destination and a reporting frequency of the sensing measurement data.

7. The method of claim 6, further comprising:
transmitting sensing signal to the second device.

8. The method of claim 7, further comprising:
receiving a reporting message including sensing measurement data from the second device,
wherein the measurement data is generated and reported by the second device based on the sensing measurement configuration information.

9. The method of claim 1,
wherein the first device is a base station, and the second device is a UE, or
wherein the first device is a UE, and the second device is a UE, or
wherein the first device is a UE, and the second device is a base station.

10. A first device configured to operate in a wireless communication system, wherein the first device comprising:
one or more transceiver;
one or more processor; and
one or more memory operably connectable to the at least one processor and storing instructions,
wherein based on the instructions being executed by the at least one processor, perform operations comprising: method of any one of claims 1 to 9.

11. An apparatus in a wireless communication system, wherein the first device comprising:
one or more transceiver;
one or more processor; and
one or more memory operably connectable to the at least one processor and storing instructions,
wherein based on the instructions being executed by the at least one processor, perform operations comprising:
performing a registration procedure for registering a user equipment (UE) to an access and mobility management function (AMF) node,
wherein the registration procedure includes the steps of the UE transmitting a registration request message including a registration type and the AMF node transmitting a registration accept message to the UE;
transmitting a sensing group setup request message to one or more candidate responders including other apparatus for configuring a sensing group;
receiving a response message from the other apparatus; and
determining whether to transmit a complete message, based on the minimum number of responders in the sensing group.

12. A non-transitory Computer Readable Medium (CRM) storing instructions that, based on being executed by one or more processor, perform operations comprising:
performing a registration procedure for registering a user equipment (UE) to an access and mobility management function (AMF) node,
wherein the registration procedure includes the steps of the UE transmitting a registration request message including a registration type and the AMF node transmitting a registration accept message to the UE;
transmitting a sensing group setup request message to one or more candidate responders including other apparatus for configuring a sensing group;
receiving a response message from the other apparatus; and
determining whether to transmit a complete message, based on the minimum number of responders in the sensing group.

13. A method for performing communication, the method performed by a second device and comprising:
performing a registration procedure for registering a user equipment (UE) to an access and mobility management function (AMF) node,
wherein the registration procedure includes the steps of the UE transmitting a registration request message including a registration type and the AMF node transmitting a registration accept message to the UE;
receiving a sensing group setup request message for configuring a sensing group from a first device; and
transmitting a response message to the first device,
wherein the response message includes acceptance, rejection, or adjustment.

14. The method of claim 13, further comprising:
receiving a completion message from the first device.

15. The method of claim 13 or 14, further comprising:
receiving waking up information from the first device,
based on that the waking up information, being changed from Idle mode to Active mode.

16. The method of any one of claims 13 to 15, further comprising:
receiving, from the first device, sensing measurement configuration information including at least one of a sensing measurement ID (SMID), a sensing group ID (SGID), a type of sensing measurement data, sensing measurement data generation frequency, and/or a reporting destination and a reporting frequency of the sensing measurement data.

17. The method of any one of claims 13 to 16,
receiving sensing signal to the second device.

18. The method of claim 17, further comprising:
generating sensing measurement data based on the sensing measurement configuration information and the sensing signal transmitted from the first device; and
transmitting a reporting message for reporting the sensing measurement data based on the sensing measurement configuration information, to the first device.

19. A second device configured to operate in a wireless communication system, wherein the second device comprising:
one or more transceiver;
one or more processor; and
one or more memory operably connectable to the at least one processor and storing instructions,
wherein based on the instructions being executed by the at least one processor, perform operations comprising: method of any one of claims 13 to 18.
